# EUROPEAN PATENT SPECIFICATION

(11) **EP 3 570 500 B1**
(45) Date of publication and mention of the grant of the patent: **17.03.2021**
(21) Application number: 18172510.2
(22) Date of filing: 15.05.2018
(51) Int. Cl.: H04L 12/40

(54) **A COMMUNICATION NETWORK**
KOMMUNIKATIONSNETZWERK
RÉSEAU DE COMMUNICATION

(43) Date of publication of application: 20.11.2019
(73) Proprietor: Volvo Car Corporation, 40 531 Göteborg (SE)
(72) Inventor: Eriksson, Andreas, 43147 Mölndal (SE); Almhagen, Petter, 433 32 Partille (SE); Muller, Jan, 42370 SÄVE (SE); Jagre, Erik, 41757 Göteborg (SE)
(74) Representative: Kransell & Wennborg KB

(56) References cited:
- US-A- 4 685 113
- US-A- 4 939 730
- US-B2- 9 400 543
- US-B2- 9 634 859

## Description

### Field of the Invention

The present invention relates to a communication network for a host system and to a method for preventing a malfunctioning node connectable to a communication bus via a gate in a communication network to transmit a signal on the communication bus.

### Background of the Invention

Distributed networks generally comprise a large number of nodes connected via one or more communication buses. In the automotive industry this would correspond to a node network with for example CAN communication.

The nodes may be able to transition between an operative state, an "awake state", and an in-active state, a "sleep state". Moreover, the nodes on the network are often able to monitor the messages sent on the communication bus and if a message is detected the nodes may transition from the sleep state to the awake state. This means that a single node has the ability to wake up all the other nodes on the same network regardless of which node was the target for the sent message.

Sleep state control is important for reducing the energy consumption of the network. It is therefore of interest to improve the sleep state control on distributed networks. Furthermore, it would also be desirable to be able to identify malfunctioning nodes that may cause other nodes to wake up when they are not supposed to.

Accordingly, there is room for improvements in control on distributed networks From the prior art it is also known the patent application with the publication number US9400543 which discloses a main body ECU as a slave node includes a switch. The switch is under OFF state when a prohibition signal is outputted from a verification ECU as a master node and under ON state when the prohibition signal is not outputted. The switch is inserted in a reception path between a receive port of a microcomputer of the main body ECU and a receiver of a transceiver that is connected with a communication bus. When the switch is under OFF state, a reception signal outputted by the transceiver is not inputted into the microcomputer of the main body ECU. Therefore, the microcomputer is not activated even if an activation frame is transmitted to the communication bus; this enables the main body ECU to maintain a sleep mode

### Summary

In view of above, it is an object of the present invention to provide improved control for a communication network comprising distributed nodes.

According to a first aspect of the invention, there is provided a communication network for a host system according to claim 1.

The present invention is based on the realization of a master control unit responsible for transitioning the gates between operational modes based on comparing the request signal with an operational state of the host system. Thus, the master control unit evaluates whether or not the request from the node is reasonable with respect to the operational state of the host system. If the master control unit concludes that the node should be allowed to transmit a signal to the communication bus then the respective gate is instructed by the master control unit to open the access to the communication bus for the node.

On the other hand, if the master control unit concludes that the node should not be allowed to transmit a signal to the communication bus then the respective gate is instructed by the master control unit to deny the access to the communication bus for the node. Thereby the node is prevented from waking up other nodes on the network. Furthermore, a node which may be malfunctioning in some way, e.g. a node that is attempting to transmit malign data, or a so called babbling idiot node, may be prevented from communicating on the communication bus.

A host system state signal is a signal that serves as a reference for the host system and that provides a reference for the master control unit to determine whether or not it is reasonable for a node to communicate on the communication bus. The host system state signal may further be used as a reference to evaluate whether or not a node is a malfunctioning node.

In embodiments, the control unit may be configured to: determine a set of nodes that are not needed for the host system operational state, and control the respective gate to isolate the set of nodes. Thus, the nodes that are not needed in the present host system operational states may be proactively prevented from communicating with the other nodes on the network. Hereby, the number of malfunctioning nodes that are able to communicate on the network is substantially decreased or even eliminated.

In embodiments, the master control unit may be configured to:
when the comparison indicates that the node should be allowed to communicate on the communication bus, evaluate a status of the node based on analyzing a signal or a set of signals that the node attempts to transmit on the communication bus; control the respective gate to isolate the node when the status indicates that that the node is a malfunctioning node. Hence, the master control unit is advantageously able to evaluate the signals transmitted from a node. Thereby, even if the comparison between the host state signal and the request from the gate indicates that the node should be allowed to communicate on the communication bus the master control unit may control the respective gate to isolate the node. Thereby, the efficiency in preventing malfunctioning nodes to communicate on the communication bus is improved.

In embodiments, the control unit may be configured to: based on the comparing of the request signal with the state signal, determining that the node associated with the gate from which the request signal was sent is a candidate malfunctioning node when the comparison indicates that the nod should not be allowed to communication on the communication bus, and control the respective gate to isolate the malfunctioning node. Thus, traceability of malfunctioning nodes is advantageously obtained at the same time as preventing the malfunctioning node to communicate on the network.

In embodiments, the master control unit may be configured to: provide an identification signal comprising identification information for the associated node and an indication that the associate node is a candidate malfunctioning node. Identification information is provided such that the malfunctioning node may be investigated by maintenance systems or personnel.

The master control unit may be configured to store the identification information identifying the candidate malfunctioning node in a memory.

Each gate may be connected between one single node and the communication bus. Thus, gate-node pairs may be comprised in the communication network. Thereby improved control and traceability of the communication on the network is obtained.

In embodiments, each gate may comprise a switch circuit configured to isolate the at least one respective node from the communication bus in the second operational mode. For example, the input port from the node the gate may be redirected away from the output port of the gate. For example, the node may be prevented from communicating on the communication bus. The host system may be a vehicle system, whereby the host system operational state may be a vehicle operational state.

There is further provided a vehicle comprising the communication network according to any one of the preceding claims.

According to a second aspect of the invention, there is provided a method for preventing a malfunctioning node connectable to a communication bus via a gate in a communication network to transmit a signal on the according to claim 10.

Generally, a node may be in an active state which may be a normal operation state of the node. In contrast, an in-active state of the node may be a sleep mode of the node.

According to embodiments, the method may comprise determining a set of nodes that are not needed for the present host system operational state, and controlling the respective gate to isolate the set of nodes.

According to embodiments, the method may comprise storing identification information for identifying the candidate malfunctioning node.

This second aspect of the invention provides similar advantages as discussed above in relation to the previous aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 conceptually illustrates application of embodiments of the invention;
Fig. 2 schematically illustrates communication network according to an exemplary embodiment;
Fig. 3 schematically illustrates an exemplary gate;
Fig. 4 is a flow chart of method steps according to embodiments of the invention;
Fig. 5 is a flow chart of method steps according to embodiments of the invention; and
Fig. 6 is a flow chart of method steps according to embodiments of the invention.

### Detailed Description of Example Embodiments

In the present detailed description, various embodiments of the system and method according to the present invention are mainly described with reference to a communication network comprised in a vehicle. However, the present invention is equally well applicable to other application such as automated manufacturing lines, robot cells, smart houses, etc. Thus, this invention may generally be embodied in many different forms and should not be construed as limited to the embodiments set forth herein; rather, these embodiments are provided for thoroughness and completeness, and fully convey the scope of the invention to the skilled person. Like reference characters refer to like elements throughout.

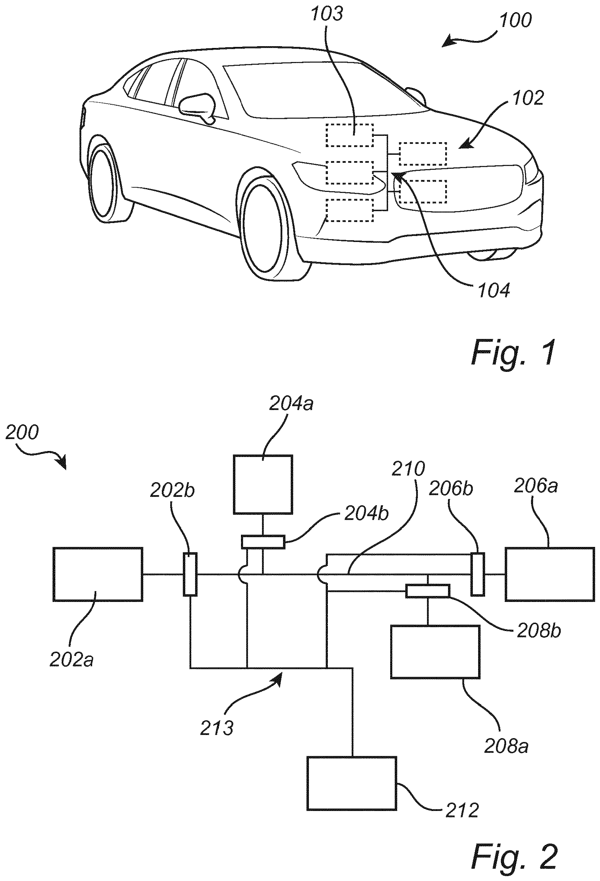

Fig. 1 conceptually illustrates a vehicle in the form of a car 100. The car comprises a communication network 102 with distributed nodes 103 (only one is numbered). The communication network comprises at least one CAN bus 104 for transmitting signals between the nodes. The nodes are associated with functions and various modules of the car such as steering control, propulsion and speed control, transmission, lighting systems, energy management systems, body controllers, infotainment systems, door modules, and other electrical systems, to mention a few examples.

Fig. 2 illustrates box diagram of a communication network 200 comprising distributed nodes 202a, 204a, 206a, and 208a. The nodes are connectable to a communication bus 210 such that the nodes can transmit signals between each other on the communication bus 210. In this example the communication network 200 comprises four nodes that are shown for illustrative purposes. However, any number of nodes in the communication network is within the scope of the present disclosure. In particular communication systems with larger number of nodes benefit from the present inventive concept since the likelihood of misbehaving nodes increases with larger number of nodes in the network.

A respective gate 202b, 204b, 206b, and 208b is connected between each node 202a, 204a, 206a, and 208a and the communication bus 210. Thus, in this example embodiment, four gate-node pairs are formed, node 202a with gate 202b, node 204a with gate 204b, node 206a with gate 206b, and node 208a with gate 208b.

The gates 202b, 204b, 206b, and 208b are configured to operate in at least two different operational modes. A first operational mode in which the gates 202b, 204b, 206b, and 208b are configured to allow its respective node to communicate on the communication bus 210, and a second operational mode in which the gates 202b, 204b, 206b, and 208b are configured to isolate its respective node from the communication bus 210 such that the node may not transmit signals onto the communication bus 210.

The communication network 200 comprises a master control unit 212 connected to the gates 202b, 204b, 206b, and 208b. The master control unit 212 is configured to communicate with the gates 202b, 204b, 206b, and 208b to control the operation of the gates 202b, 204b, 206b, and 208b.

The master control unit 212 is configured to receive a request signal from the gates 202b, 204b, 206b, and 208b. The request signal indicates a request from the respective node 202a, 204a, 206a, and 208a to transmit a signal to the communication bus 210. Furthermore, the master control unit 212 is configured to receive a state signal indicative of a present host system operational state. The master control unit 212 compares the request signal with the state signal, and based on the outcome of the comparison, the master control unit 212 is configured to control the respective gate 202b, 204b, 206b, and 208b to transition from one of the first operational mode and the second operational mode to the other one of the first operational mode and the second operational mode. In other words, the master control unit 212 controls each of the gates 202b, 204b, 206b, and 208b to either allow the respective node 202a, 204a, 206a, and 208a to transmit a signal to the communication bus 210, or deny the respective node to transmit a signal to the communication bus 210. In this way, only selected nodes may be woken up since the master control unit 212 has the overall control of the communication access for the nodes 202a, 204a, 206a, and 208a to the communication bus 210.

For instance, if the host system operational state is that the system is in-active, but a request signal is received from gate 202b that the node 202a requests to transmit a signal on the communication bus 210. Since the node 202a should be in-active in the in-active state of the host system then the master control unit 212 may control the gate 202b to deny access to the communication bus 210 for the node 202a and thereby isolate the node 202a from the communication bus 210.

Another possibility is that the master control unit 212 may control all the gates that are connected to nodes that are not needed for a present host system operational state, to deny access to the communication bus 212 regardless of the request signal from the gate. For instance, if the present host system operational state is such that the node 206a will never be required for that host system operational state, then the master control unit 212 may control the gate 206b to maintain the node 206a isolated from the communication bus 210 as long as the host system operational state is such that the node 206a is not needed.

In addition, if the request signal from a gate for a node to access the communication bus 210 is denied in the present host system operational state, the respective node may be indicated as malfunctioning node by the master control unit 212. For example, if the present host system operational state is such that the node 208a is not required for that host system operational state but a request signal is anyway received from the gate 208b, then the master control unit 212 may control the gate 208b to isolate the node 208a from the communication bus 210 and indicate the node 208a as a malfunctioning node.

An identification signal may be provided by the master control unit 212 to indicate that the node 208a is a malfunctioning node. In this way, a malfunctioning node may be identified and subsequently investigated and repaired. In some cases the identification information identifying the candidate malfunctioning node may be stored in a memory (not shown) either in the master control unit 212 or elsewhere. Thus, several malfunctioning nodes may be identified during a time span and their respective identifying information may be stored in the memory such that several malfunctioning nodes may be repaired at the same maintenance window.

In some embodiments the master control unit 212 is configured to evaluate a status of the node, e.g. node 202a, based on analyzing a signal or a set of signals that the node 202a attempts to transmit on the communication bus 210. The evaluation may be performed regardless of the outcome of the comparison between the host system state signal and the request signal. In other words, the comparison may indicate that the node should be allowed to transmit a signal on the communication bus 210, but if the status of the node indicates that that the node is a malfunctioning node, the master control unit 212 may control the gate 202b to isolate the node 202a (or maintain the node 202a isolated). The status of the node may indicate for instance that the node 202a is attempting to transmit malign data or that the node is a babbling idiot node.

The evaluation may be based on analyzing the frame rate of the data sent from the nod, analyzing the values of parameters in the data, or analyzing data frames content. For instance, the frame rate may nor exceed a threshold frame rate, the parameter values may not exceed predetermined parameter value ranges, and the data frames content should be related to the present state of the host system.

The master control unit is capable of storing identifying information of the malfunctioning node regardless of the operational mode of the gate.

The communication bus 210 may be a CAN-bus. The master control unit 212 may be connected to the gates via CAN-buses 213. In some possible implementations the master control unit may be hardwired to the gates.

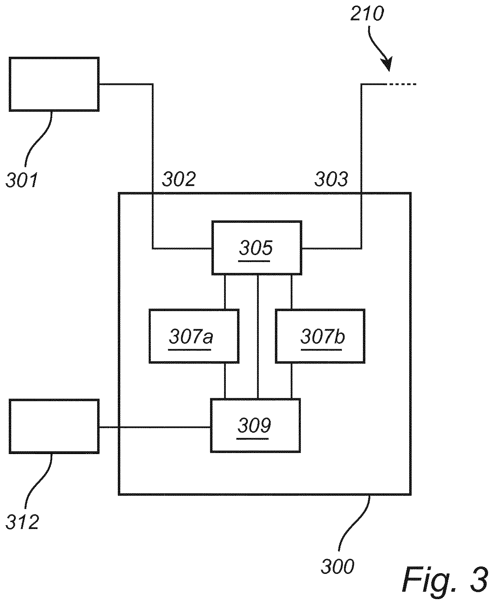

Fig. 3 is a block diagram of an exemplary gate 300. The gate 300 is one possible gate configuration and is shown for exemplary purposes.

The gate 300 comprises two ports 302 and 303. One of the ports, e.g. port 302 is connected to a node 301 and the other port 303 is connected to a communication bus 210. The gate 300 further comprises a switch circuit 305, two network transceivers 307a-b, and a controller 309 communicatively connected to a master control unit 312 (see above) of the communication network.

In its first operational state the gate 300 is configured to allow communication from the node side, in this case the side of the port 302, to the communication bus connected to the port 303. Thus, the ports 302 and 303 are connected to each other via the switch circuit 305 and signals are allowed to be transmitted between the ports 302 and 303 through the gate 300 via the switch circuit 305.

In its second operational state the gate 300 is configured to isolate the ports 302 and 303 from each other. When the controller 309 receives a control signal from the master control unit 312 to transition to the second operational state, the controller 309 controls the switch circuit 305 to connect the port 302 to the transceiver 307a and the port 303 to transceiver 307b which transceivers 307a-b are connected to the controller 309. In other words, signals transmitted to or from the node 301 of the gate 300 may still be monitored by the master control unit 312 since it is connected to the controller 309 while at the same time allowing for the node 301 to be isolated from the communication bus 210 such that no signals from the node may reach the communication bus 210.

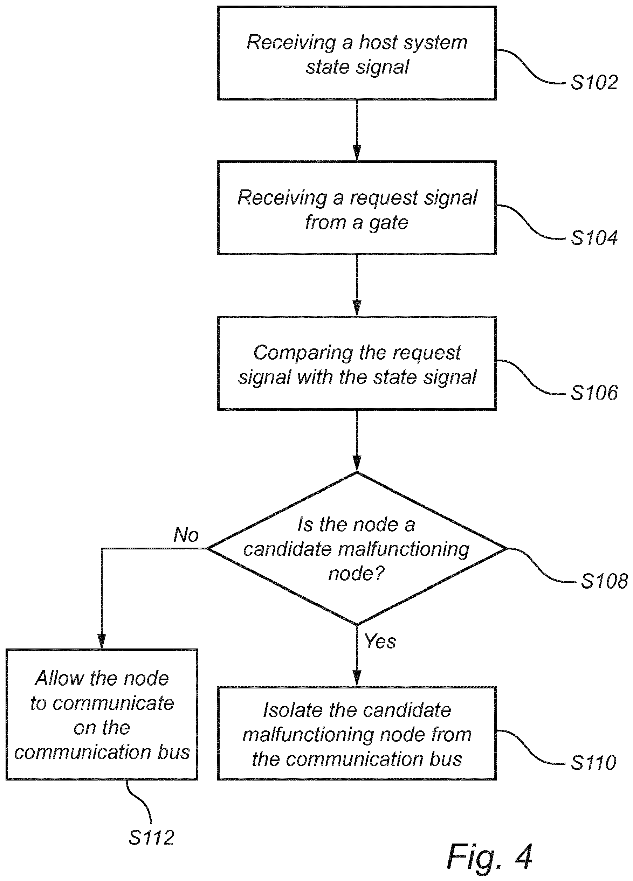

Fig. 4 illustrates a flow-chart of method steps according to example embodiments. In step S102 a host system state signal is received indicative of a present host system operational state. Further, in step S104 a request signal is received from a gate, the signal is indicative of a request for a node to transmit a signal to the communication bus. The request signal is compared S106 with the state signal. Based on the outcome of the comparison it is determined S108 whether or not the node is a candidate malfunctioning node. If it is determined that the node is a malfunctioning node the respective gate of the candidate malfunctioning node is controlled S110 to isolate the candidate malfunctioning node from the communication bus. If the node is determined to not be a candidate malfunctioning node, the gate is controlled to allow S112 the node to communicate and thereby transmit signals on the communication bus.

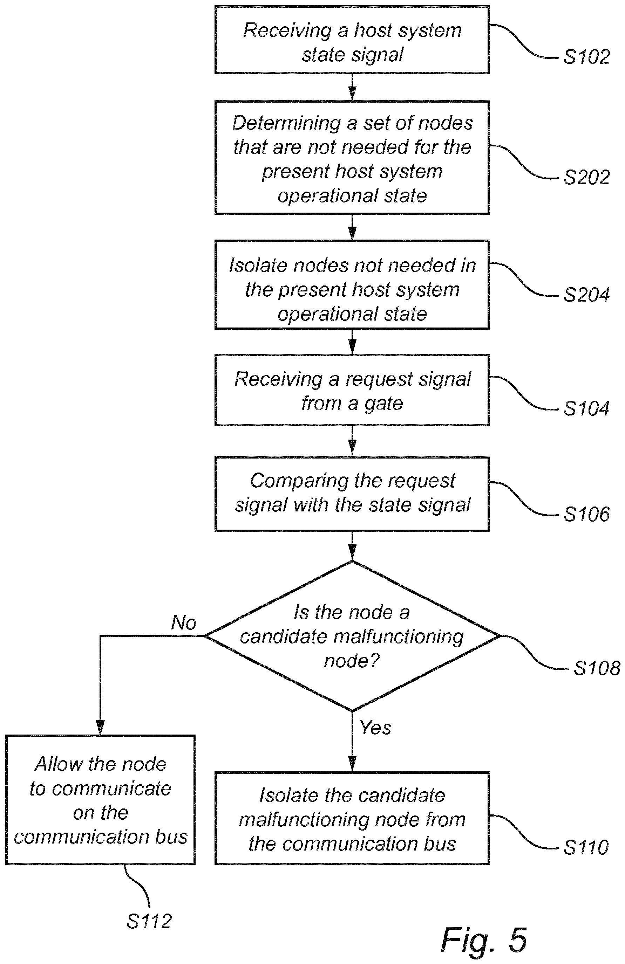

Fig. 5 illustrates another flow-chart with method steps according to embodiments of the invention. In addition to the steps of fig. 4, fig. 5 shows an additional step S202 to determine a set of nodes that are not needed for the present host system operational state. The respective gate is subsequently controlled S204 to isolate the set of nodes determined to not be needed for the present host system operational state from the communication bus.

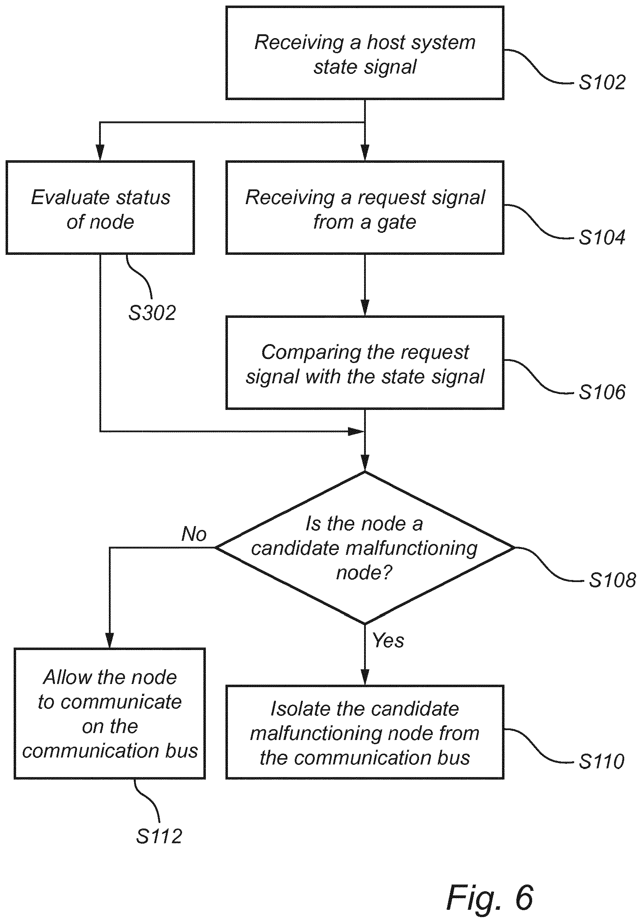

Fig. 6 illustrates another flow-chart with method steps according to embodiments of the invention. In addition to the steps of fig. 4, the embodiment illustrated by the flow chart in fig. 6 includes the additional step S302 of evaluating a status of the node based on analyzing a signal or a set of signals that the node attempts to transmit on the communication bus. The respective gate is controlled to isolate S110 its node when the status indicates that that the node is a malfunctioning node.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A communication network (200) for a host system, comprising:
- a network of distributed nodes (node 202a, 204a, 206a, and 208a) connectable to a communication bus (210);
- a set of gates (202b, 204b, 206b, and 208b), wherein each gate is connected between at least one respective node and the communication bus, wherein each gate is operational in at least two operation modes, a first operational mode in which the gate is configured to allow the at least one respective node to communicate on the communication bus, and a second operational mode in which the gate is configured to isolate the at least one respective node from the communication bus,
- a master control unit (212) connected to each of the gates and configured to:
- receive a state signal indicative of a present host system operational state, wherein the state signal is a reference for the master control unit to determine whether or not it is reasonable for a node to communicate on the communication bus,
- receive request signals from the gates indicative of a request from the respective nodes to transmit a signal to the communication bus, and
- based on comparing the request signal with the state signal, control the respective gate to transition from one of the first operational mode and the second operational mode to the other one of the first operational mode and the second operational mode.

2. The communication network according to claim 1, wherein the master control unit is configured to:
- determine a set of nodes that are not needed for the host system operational state, and
- control the respective gate to isolate the set of nodes.

3. The communication network according to claim 1 or 2, wherein the master control unit is configured to:
when the comparison indicates that the node should be allowed to communicate on the communication bus,
- evaluate a status of the node based on analyzing a signal or a set of signals that the node attempts to transmit on the communication bus;
- control the respective gate to isolate the node when the status indicates that that the node is a malfunctioning node.

4. The communication network according to any one of the preceding claims, wherein the master control unit is configured to:
- based on the comparing of the request signal with the host system state signal, determining that the node associated with the gate from which the request signal was sent is a candidate malfunctioning node when the comparison indicates that the node should not be allowed to communicate on the communication bus, and
- control the respective gate to isolate the malfunctioning node.

5. The communication network according to claim 3 or 4, wherein the master control unit is configured to:
- provide an identification signal comprising identification information for the malfunctioning node and an indication that the node is a candidate malfunctioning node.

6. The communication network according to claims 5, wherein the master control unit is configured to store the identification information identifying the candidate malfunctioning node in a memory.

7. The communication network according to any one of the preceding claims, wherein each gate is connected between one single node and the communication bus.

8. The communication network according to any one of the preceding claims, wherein each gate comprising a switch circuit configured to isolate the at least one respective node from the communication bus in the second operational mode.

9. A vehicle (100) comprising the communication network according to any one of the preceding claims.

10. A method for preventing a malfunctioning node connectable to a communication bus via a gate in a communication network to transmit a signal on the communication bus, the method comprising:
- receiving (S102) a host system state signal indicative of a present host system operational state, wherein the state signal is a reference for determining whether or not it is reasonable for a node to communicate on the communication bus,
- receiving (S104) a request signal from a gate, the request signal is indicative of a request for a node to transmit a signal to the communication bus,
- comparing (S106) the request signal with the state signal,
- determining (S108) that the node is a candidate malfunctioning node based on the comparison, and
- controlling (S110) the gate of the candidate malfunctioning node to isolate the candidate malfunctioning node from the communication bus.

11. The method according to claim 10, comprising:
- determining (S202) a set of nodes that are not needed for the present host system operational state, and
- controlling (S204) the respective gate to isolate the set of nodes.

12. The method according to any one claim 10 or 11, wherein when the comparison indicates that the node should be allowed to communicate on the communication bus,
- evaluating (S302) a status of the node based on analyzing a signal or a set of signals that the node attempts to transmit on the communication bus;
- controlling the respective gate to isolate the node when the status indicates that that the node is a malfunctioning node.

13. The method according to any one claims 10 to 12, comprising:
- storing identification information for identifying the candidate malfunctioning node.

## Patentansprüche

1. Kommunikationsnetz (200) für ein Hostsystem, das Folgendes umfasst:
- ein Netz aus verteilten Knoten (Knoten 202a, 204a, 206a und 208a), die mit einem Kommunikationsbus (210) verbindbar sind;
- eine Menge von Gates (202b, 204b, 206b und 208b), wobei jedes Gate mindestens einen jeweiligen Knoten und den Kommunikationsbus verbindet, wobei jedes Gate in mindestens zwei Betriebsmodi betriebsfähig ist, einem ersten Betriebsmodus, in dem das Gate konfiguriert ist, um das Kommunizieren des mindestens einen jeweiligen Knotens auf dem Kommunikationsbus zu erlauben, und einem zweiten Betriebsmodus, in dem das Gate konfiguriert ist, um den mindestens einen jeweiligen Knoten vom Kommunikationsbus zu trennen,
- eine Master-Steuereinheit (212), die mit jedem der Gates verbunden und für Folgendes konfiguriert ist:
- Empfangen eines Zustandssignals, das einen aktuellen Hostsystembetriebszustand anzeigt, wobei das Zustandssignal eine Referenz für die Master-Steuereinheit ist, um zu bestimmen, ob das Kommunizieren eines Knotens auf dem Kommunikationsbus angemessen ist oder nicht,
- Empfangen von Aufforderungssignalen von den Gates, die eine Aufforderung von den jeweiligen Knoten zum Übertragen eines Signals an den Kommunikationsbus anzeigen, und
- basierend auf einem Vergleich des Aufforderungssignals mit dem Zustandssignal Steuern des jeweiligen Gates, sodass es von einem von dem ersten Betriebsmodus und dem zweiten Betriebsmodus in den anderen von dem ersten Betriebsmodus und dem zweiten Betriebsmodus wechselt.

2. Kommunikationsnetz nach Anspruch 1, wobei die Master-Steuereinheit für Folgendes konfiguriert ist:
- Bestimmen einer Menge von Knoten, die nicht für den Hostsystembetriebszustand benötigt werden, und
- Steuern des jeweiligen Gates, sodass die Menge von Knoten getrennt wird.

3. Kommunikationsnetz nach Anspruch 1 oder 2, wobei die Master-Steuereinheit für Folgendes konfiguriert ist:
wenn der Vergleich anzeigt, dass das Kommunizieren des Knotens auf dem Kommunikationsbus erlaubt sein soll,
- Bewerten eines Status des Knotens basierend auf einer Analyse eines Signals oder einer Menge von Signalen, das/die der Knoten auf dem Kommunikationsbus zu übertragen versucht;
- Steuern des jeweiligen Gates, sodass der Knoten getrennt wird, wenn der Status anzeigt, dass der Knoten ein Knoten mit einer Schadfunktion ist.

4. Kommunikationsnetz nach einem der vorhergehenden Ansprüche, wobei die Master-Steuereinheit für Folgendes konfiguriert ist:
- basierend auf dem Vergleich des Aufforderungssignals mit dem Hostsystemzustandssignal Bestimmen, dass der Knoten, der dem Gate, von dem das Aufforderungssignal gesendet wurde, zugeordnet ist, ein Knoten mit einer eventuellen Schadfunktion ist, wenn der Vergleich anzeigt, dass das Kommunizieren des Knotens auf dem Kommunikationsbus nicht erlaubt sein soll, und
- Steuern des jeweiligen Gates, sodass der Knoten mit einer Schadfunktion getrennt wird.

5. Kommunikationsnetz nach Anspruch 3 oder 4, wobei die Master-Steuereinheit für Folgendes konfiguriert ist:
- Bereitstellen eines Identifizierungssignals, das Identifizierungsinformationen für den Knoten mit einer Schadfunktion und eine Anzeige, dass der Knoten ein Knoten mit einer eventuellen Schadfunktion ist, umfasst.

6. Kommunikationsnetz nach Anspruch 5, wobei die Master-Steuereinheit konfiguriert ist, um die Identifizierungsinformationen, die den Knoten mit einer eventuellen Schadfunktion identifizieren, in einem Speicher abzulegen.

7. Kommunikationsnetz nach einem der vorhergehenden Ansprüche, wobei jedes Gate einen einzigen Knoten und den Kommunikationsbus verbindet.

8. Kommunikationsnetz nach einem der vorhergehenden Ansprüche, wobei jedes Gate einen Schalterstromkreis umfasst, der konfiguriert ist, um den mindestens einen jeweiligen Knoten im zweiten Betriebsmodus vom Kommunikationsbus zu trennen.

9. Fahrzeug (100), das das Kommunikationsnetz nach einem der vorhergehenden Ansprüche umfasst.

10. Verfahren zum Verhindern, dass ein Knoten mit einer Schadfunktion mit einem Kommunikationsbus über ein Gate in einem Kommunikationsnetz zum Übertragen eines Signals auf dem Kommunikationsbus verbindbar ist, wobei das Verfahren Folgendes umfasst:
- Empfangen (S102) eines Hostsystemzustandssignals, das einen aktuellen Hostsystembetriebszustand anzeigt, wobei das Zustandssignal eine Referenz ist, um zu bestimmen, ob das Kommunizieren eines Knotens auf dem Kommunikationsbus angemessen ist oder nicht,
- Empfangen (S104) eines Aufforderungssignals von einem Gate, wobei das Aufforderungssignal eine Aufforderung dazu, dass ein Knoten ein Signal an den Kommunikationsbus überträgt, anzeigt,
- Vergleichen (S106) des Aufforderungssignals mit dem Zustandssignal,
- Bestimmen (S108), dass der Knoten ein Knoten mit einer eventuellen Schadfunktion ist, basierend auf dem Vergleich und
- Steuern (S110) des Gates des Knotens mit einer eventuellen Schadfunktion, sodass der Knoten mit einer eventuellen Schadfunktion vom Kommunikationsbus getrennt wird.

11. Verfahren nach Anspruch 10, das Folgendes umfasst:
- Bestimmen (S202) einer Menge von Knoten, die nicht für den aktuellen Hostsystembetriebszustand benötigt werden, und
- Steuern (S204) des jeweiligen Gates, sodass die Menge von Knoten getrennt wird.

12. Verfahren nach Anspruch 10 oder 11, wobei, wenn der Vergleich anzeigt, dass das Kommunizieren des Knotens auf dem Kommunikationsbus erlaubt sein soll,
- Bewerten (S302) eines Status des Knotens basierend auf einer Analyse eines Signals oder einer Menge von Signalen, das/die der Knoten auf dem Kommunikationsbus zu übertragen versucht;
- Steuern des jeweiligen Gates, sodass der Knoten getrennt wird, wenn der Status anzeigt, dass der Knoten ein Knoten mit einer Schadfunktion ist.

13. Verfahren nach einem der Ansprüche 10 bis 12, das Folgendes umfasst:
- Speichern von Identifizierungsinformationen zum Identifizieren des Knotens mit einer eventuellen Schadfunktion.

## Revendications

1. Réseau de communication (200) pour un système d'hôte, comprenant :
- un réseau de nœuds distribués (nœud 202a, 204a, 206a et 208a) connectables à un bus de communication (210) ;
- un ensemble de grilles (202b, 204b, 206b et 208b), dans lequel chaque grille est connectée entre au moins un nœud respectif et le bus de communication, dans lequel chaque grille est opérationnelle dans au moins deux modes d'exploitation, un premier mode opérationnel dans lequel la grille est configurée pour permettre à l'au moins un nœud respectif de communiquer sur le bus de communication, et un second mode opérationnel dans lequel la grille est configurée pour isoler l'au moins un nœud respectif du bus de communication,
- une unité de contrôle maîtresse (212) connectée à chacune des grilles et configurée pour :
- recevoir un signal d'état indiquant un présent état opérationnel d'un système d'hôte, dans lequel le signal d'état est une référence pour l'unité de contrôle maîtresse afin de déterminer si oui ou non il est raisonnable pour un nœud de communiquer sur le bus de communication,
- recevoir des signaux de demande des grilles indiquant une demande provenant des nœuds respectifs de transmettre un signal au bus de communication, et
- sur la base de la comparaison du signal de demande au signal d'état, contrôler la grille respective pour passer de l'un du premier mode opérationnel et du second mode opérationnel à l'autre du premier mode opérationnel et du second mode opérationnel.

2. Réseau de communication selon la revendication 1, dans lequel l'unité de contrôle maîtresse est configurée pour :
- déterminer un ensemble de nœuds qui ne sont pas nécessaires pour l'état opérationnel du système d'hôte, et
- contrôler la grille respective pour isoler l'ensemble de nœuds.

3. Réseau de communication selon la revendication 1 ou 2, dans lequel l'unité de contrôle maîtresse est configurée pour :
lorsque la comparaison indique que le nœud devrait être autorisé à communiquer sur le bus de communication,
- évaluer un statut du nœud sur la base de l'analyse d'un signal ou d'un ensemble de signaux que le nœud tente de transmettre sur le bus de communication ;
- contrôler la grille respective pour isoler le nœud lorsque le statut indique que le nœud est un nœud défaillant.

4. Réseau de communication selon l'une quelconque des revendications précédentes, dans lequel l'unité de contrôle maîtresse est configurée pour :
- sur la base de la comparaison du signal de demande au signal d'état de système d'hôte, déterminer que le nœud associé à la grille à partir de laquelle le signal de demande a été envoyé est un nœud défaillant candidat lorsque la comparaison indique que le nœud ne devrait pas être autorisé à communiquer sur le bus de communication, et
- contrôler la grille respective pour isoler le nœud défaillant.

5. Réseau de communication selon la revendication 3 ou 4, dans lequel l'unité de contrôle maîtresse est configurée pour :
- fournir un signal d'identification comprenant des informations d'identification pour le nœud défaillant et une indication que le nœud est un nœud défaillant candidat.

6. Réseau de communication selon la revendication 5, dans lequel l'unité de contrôle maîtresse est configurée pour stocker les informations d'identification identifiant le nœud défaillant candidat dans une mémoire.

7. Réseau de communication selon l'une quelconque des revendications précédentes, dans lequel chaque grille est connectée entre un seul nœud et le bus de communication.

8. Réseau de communication selon l'une quelconque des revendications précédentes, dans lequel chaque grille comprenant un circuit de commutation est configurée pour isoler l'au moins un nœud respectif du bus de communication dans le second mode opérationnel.

9. Véhicule (100) comprenant le réseau de communication selon l'une quelconque des revendications précédentes.

10. Procédé permettant d'empêcher un nœud défaillant connectable à un bus de communication par l'intermédiaire d'une grille dans un réseau de communication de transmettre un signal sur le bus de communication, le procédé comprenant :
- la réception (S102) d'un signal d'état de système d'hôte indiquant un présent état opérationnel d'un système d'hôte, dans lequel le signal d'état est une référence pour déterminer si oui ou non il est raisonnable pour un nœud de communiquer sur le bus de communication,
- la réception (S104) d'un signal de demande d'une grille, le signal de demande indiquant une demande pour qu'un nœud transmette un signal au bus de communication,
- la comparaison (S106) du signal de demande au signal d'état,
- la détermination (S108) que le nœud est un nœud défaillant candidat sur la base de la comparaison, et
- le contrôle (S110) de la grille du nœud défaillant candidat pour isoler le nœud défaillant candidat du bus de communication.

11. Procédé selon la revendication 10, comprenant :
- la détermination (S202) d'un ensemble de nœuds qui ne sont pas nécessaires pour le présent état opérationnel du système d'hôte, et
- le contrôle (S204) de la grille respective pour isoler l'ensemble de nœuds.

12. Procédé selon l'une quelconque des revendications 10 ou 11, dans lequel lorsque la comparaison indique que le nœud devrait être autorisé à communiquer sur le bus de communication,
- évaluer (S302) un statut du nœud sur la base de l'analyse d'un signal ou d'un ensemble de signaux que le nœud tente de transmettre sur le bus de communication ;
- contrôler la grille respective pour isoler le nœud lorsque le statut indique que le nœud est un nœud défaillant.

13. Procédé selon l'une quelconque des revendications 10 à 12, comprenant :
- le stockage des informations d'identification pour identifier le nœud défaillant candidat.
